(19) Europäisches Patentamt / European Patent Office / Office européen des brevets

(11) **EP 1 281 982 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(51) Int Cl.:
*G01S 3/808* *(2006.01)*      *G01S 3/801* *(2006.01)*

(21) Anmeldenummer: **02012275.0**

(22) Anmeldetag: **05.06.2002**

(54) **Verfahren und Schaltungsanordnung zur Bewertung der Kohärenz von Schallwellen**

Method and circuit for the evaluation of the coherence of acoustic waves

Procédé et circuit d'évaluation de la cohérence des ondes acoustiques

(84) Benannte Vertragsstaaten:
**AT BE CH CY DE DK ES FI FR GB GR IE IT LI LU MC NL PT SE TR**

(30) Priorität: **25.07.2001 DE 10136026**

(43) Veröffentlichungstag der Anmeldung:
**05.02.2003 Patentblatt 2003/06**

(73) Patentinhaber: **ATLAS ELEKTRONIK GMBH
28305 Bremen (DE)**

(72) Erfinder:
• **Neumeister, Dirk, Dr.
28309 Bremen (DE)**
• **Wicker, Kai, Dr.
28357 Bremen (DE)**

(74) Vertreter: **Wasiljeff, Johannes M.B.
Jabbusch Siekmann & Wasiljeff
Patentanwälte
Otto-Lilienthal-Strasse 25
28199 Bremen (DE)**

(56) Entgegenhaltungen:
**EP-A- 0 702 245**     **EP-A- 1 099 958**
**DE-C- 10 036 291**     **US-A- 4 910 719**

**Beschreibung**

Die Erfindung betrifft ein Verfahren und eine Schaltungsanordnung zur Bewertung der Kohärenz von Schallwellen, die sich über eine räumlich ausgedehnte Empfangsbasis mit mehreren, voneinander beabstandeten, elektroakustischen Empfänger einer Sonaranlage ausbreiten.

Bei der Detektion, Ortung und Klassifikation von Schallquellen, die Schall ins Wasser abstrahlen, von einem weit entfernten Standort aus, spielt die Kohärenz der am Standort von der Empfangsbasis der Sonaranlage empfangenen Schallwellen eine wesentliche Rolle für die Genauigkeit und Zuverlässigkeit der Messergebnisse. Die Konfidenz der Messergebnisse hängt damit von der Kenntnis des Maßes ab, mit dem ein an einem bestimmten Empfänger der Empfangsbasis empfangenes Signal der gleichen Schallquelle zugehörig ist.

Bei einem bekannten Verfahren zur Bestimmung der Form einer in einem Fluid geschleppten, linearen Antenne mit einer Vielzahl von akustischen Sensoren, die längs der Antenne verteilt sind und Signale empfangen EP-A-1 099 958), wird eine Anzahl von aufeinander folgenden Antennensegmenten mit vorgegebener Länge definiert, bei fedem Segment Seitenwinkelkanäle von der Lage der Sensoren auf der Antenne, von der Frequenz und von der Fortpflanzungsgeschwindigkeit der Wellen in dem Fluid gebildet, bei jedem Paar von Segmenten und bei jedem Kanal das Kreuzspektrum in Abhängigkeit von der Zeit und Frequenz errechnet und bei jedem Paar von Segmenten und bei jedem Kanal die Kolinearitätswinkeldifferenz zwischen den beiden Segmenten errechnet und dann die vollständige Form der Antenne, ausgehend von den einzelnen auf diese Weise berechneten Kolinearitätswinkeldifferenzen, bestimmt.

Bei einem bekannten Verfahren zur Befreiung von Körperschallstörungen (EP 0 702 245 A) wird die Kohärenz zwischen den Spektren von an elektroakustischen Wandlern empfangenen Signalen und Körperschallspektren von an Körperschallsensoren aufgenommenen Körperschallstörungen bestimmt und damit Frequenzanteile im Empfangssignal entsprechend ihrer Kohärenz mit Frequenzanteilen im Körperschallsignal unterdrückt.

Die nachveröffentlichten DE 100 36 291 A und EP 1 176 428 A zeigen ein weiteres Verfahren zur Störbefreiung von Gruppensignalen bzw. zur Verbesserung des Signal/Stör-Verhältnisses einer Sonargruppe, bei dem Gruppensignale mit einem Wichtungssignal multipliziert werden, das Phasenabweichungen der zum Gruppensignal zusammengefassten Empfangssignale berücksichtigt. Das Wichtungssignal wird berechnet, indem die Empfangssignale eines richtungsbildenden Gruppensignals zeitrichtig verzögert bezüglich ihrer Phasen miteinander addiert werden.

Bei einem bekannten Verfahren zur Bestimmung des Ortes einer Schallquelle nach Peilung und Entfernung (US 4 910 719) wird eine Empfangsbasis mit drei elektroakustischen Wandlern verwendet, die auf einer Geraden angeordnet sind und einen Abstand voneinander aufweisen, der ein Vielfaches der Wellenlänge des von der Schallquelle abgestrahlten Schalls beträgt. Die elektrischen Ausgangssignale des mittleren Wandlers werden mit den Ausgangssignalen eines jeden äußeren Wandlers kreuzkorreliert und so die Zeitverschiebung zwischen den Ausgangssignalen der Wandler bestimmt. Mit den gemessenen Zeitverschiebungen $\tau_{1,2}$ und $\tau_{2,3}$ werden in bekannter Weise der Peilwinkel $\theta_0$ zur Schallquelle gemäß

$$\Theta_0 = \arcsin \frac{c(\tau_{1,2} + \tau_{2,3})}{2L} \tag{1}$$

und die Entfernung $R_0$ der Schallquelle zum mittleren Wandler gemäß

$$R_0 = \frac{L^2 \cos^2 \Theta_0}{c(\tau_{2,3} - \tau_{1,2})} \tag{2}$$

berechnet, wobei c die Schallgeschwindigkeit und L der Wandlerabstand ist.

Diese Meßergebnisse sind nur dann zuverlässig, wenn sichergestellt ist, daß die Empfangssignale der drei Wandler miteinander vollständig oder weitgehend korrelieren, d.h. von der gleichen Schallquelle herrühren. Ist dagegen der Schallempfang durch stochastische Störquellen oder Inhomoginitäten des Ausbreitungsmediums, wie z.B. Schlieren, Lufteinschlüsse, Schichtungen, gestört, so sind die Ausgangssignale der Wandler nicht mehr kohärent, und die wie vorstehend berechneten Peilwinkel- und Entfernungswerte stellen unbrauchbare Messergebnisse dar.

Der Erfindung liegt die Aufgabe zugrunde, ein Verfahren und eine Schaltungsanordnung anzugeben, mit denen sich mit geringem Signalverarbeitungsaufwand die Kohärenz der von einer Empfangsbasis einer Sonaranlage empfangenen Schallwellen angeben und damit die Qualität der Messergebnisse prüfen lässt.

Die Aufgabe ist erfindungsgemäß durch die Merkmale im Anspruch 1 und in Anspruch 13 gelöst.

Die Erfindung hat den Vorteil, dass es mit geringem Zusatzaufwand parallel zu bekannten Verfahren der Detektion, Ortung und Klassifikation von schallabstrahlenden Zielen angewendet werden kann und dabei ohnehin vorhandene Hard- und Softwarekomponenten der Sonaranlage genutzt werden können. Die Erfindung ermöglicht eine Kontrolle der von den Messverfahren gelieferten Messergebnisse und gibt dem Nutzer an, mit welchem Konfidenzmaß er von der Zuverlässigkeit der gemessenen, aktuellen Sonardaten ausgehen kann, so daß er mittels einer Qualitätsbewertung einer Vielzahl von gemessenen Sonardaten sehr viel schneller die mit hoher Wahrscheinlichkeit richtigen Sonardaten herausfiltern und darauf eine frühzeitige Entscheidung stützen kann.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß der Erfindung wird zur Bestimmung der Phasenkohärenz aus jedem Ausgangssignal der beiden ausgewählten Empfänger ein normiertes, komplexes Signal gebildet, die beiden normierten komplexen Signale in einem Zeitfenster zu gleichen Zeitpunkten abgetastet und jeweils die den gleichen Zeitpunkten zugehörigen beiden Abtastwerte addiert. Von der sich ergebenden Summe wird der Betrag gebildet. Dann werden die Beträge der Summen addiert und von dem Additionsergebnis wird ein Mittelwert gebildet und als Bewertungsfaktor ausgegeben. Die Mittelwertbildung, die sich aus der Division des Additionsergebnisses durch die Anzahl der Abtastwerte in beiden normierten, komplexen Signalen ergibt, stellt sicher, dass bei vollständiger Korrelation, d.h. exakter Übereinstimmung beider Signale, der Bewertungsfaktor C = 1 ist. Bei vollständiger Antikorrelation, d.h. wenn die Signale zwar kohärent aber um 180° phasenverschoben sind, ergibt sich der Bewertungsfaktor C = 0.

Gemäß einer vorteilhaften Ausführungsform der Erfindung werden zusätzlich jeweils die den gleichen Zeitpunkten zugehörigen Abtastwerte voneinander subtrahiert und wird von der Differenz der Betrag gebildet. Die Beträge der Differenzen werden addiert, von dem Additionsergebnis wird ein zweiter Mittelwert gebildet und der zweite Mittelwert wird von dem wie vorstehend beschrieben erhaltenen ersten Mittelwert subtrahiert. Die Differenz der beiden Mittelwerte wird als modifizierter Bewertungsfaktor C* ausgegeben. Durch diese zusätzlichen Verfahrensschritte zur Berechnung des modifizierten Bewertungsfaktors C* sind die Grenzwerte des Bewertungsfaktors C* für vollständige Korrelation und vollständige Antikorrelation nicht mehr - wie vorstehend - auf 1 und 0, sondern jetzt auf 1 bzw. -1 festgelegt. Ist die Korrelation zwischen den Ausgangssignalen gestört, ergeben sich betragsmäßig kleinere Werte.

Zur Vereinfachung des vorstehend beschriebenen Rechenalgorithmus werden nicht direkt die Beträge der Summen bzw. der Differenzen addiert und gemittelt und dann die Mittelwerte subtrahiert, sondern nach Bildung des Betrags der Summe und des Betrags der Differenz von jeweils zwei Abtastwerten bereits der Betrag der Differenz von dem Betrag der Summen subtrahiert und die Addition und Mittelwertbildung auf die so erhaltenen Subtraktionsergebnisse angewandt.

Gemäß einer vorteilhaften Ausführungsform der Erfindung wird das komplexe Signal mittels einer Hilbert-Transformierten erzeugt und dessen Normierung durch Division des komplexen Signals durch seinen Betrag vorgenommen. Die Hilbert-Transformation und die Normierung kann an beliebiger Stelle in der Signalverarbeitung der Ausgangssignale erfolgen, so dass vorhandene Hard- und Softwarekomponenten für ein vorhandenes Messverfahren zur Messung von Sonardaten optimal zur Realisierung des erfindungsgemäßen Verfahrens bei minimalem Zusatzaufwand genutzt werden können. Bei früher Digitalisierung der Ausgangssignale im Signalverarbeitungsweg kann die Hilbert-Transformation auf die digitalen Datensätze der Ausgangssignale angewendet werden und durch FIR-Filterstrukturen erfolgen.

Als elektroakustische Empfänger können einzelne elektroakustische Wandler mit Dipol- oder Rundumcharakteristik verwendet werden. Auch Gruppen von elektroakustischen Wandlern, die in horizontaler oder vertikaler Richtung voneinander beabstandet angeordnet sind, können als Empfänger dienen. Das der erfindungsgemäße Signalverarbeitung unterzogene elektrische Ausgangssignal des Empfängers ist dann das vorverarbeitete Gruppensignal der Wandlergruppe.

Obwohl die Bedeutung des erfindungsgemäßen Verfahrens in der Kontrolle herkömmlicher Detektions-, Ortungs- und Klassifizierungsverfahren, z.B. PRS (Passiv Ranging Sonar) oder Transientendetektion (vgl. Naval Forces No. VI/1987, Seite 27 - 30) liegt, ist es möglich, das Verfahren selbst zur direkten Detektion und Ortung einzusetzen. Hierzu wird z.B. gemäß einer vorteilhaften Ausführungsform der Erfindung das erfindungsgemäße Verfahren in Verbindung mit einem Verfahren zum passiven Orten einer im Wasser befindlichen Schallquelle mittels dreier im Abstand voneinander linear angeordneten, elektroakustischen Wandlern, dem sog. PRS-Verfahren, verwendet, indem mit dem mittleren Wandler und jedem äußeren Wandler jeweils ein ausgewähltes Paar von elektroakustischen Empfängern gebildet wird und aus den wie beschrieben ermittelten Bewertungsfaktoren die Zeit- oder Phasenverschiebungen zwischen dem mittleren Wandler und den beiden äußeren Wandlern bestimmt und in bekannter Weise zur Berechnung von Peilwinkel und Entfernung der Schallquelle verwendet werden.

Die Erfindung ist anhand eines in der Zeichnung illustrierten Ausführungsbeispiels im Folgenden näher beschrieben. Es zeigen

Fig. 1 und 2    ein Blockschaltbild einer Schaltungsanordnung für ein Verfahren zur Bewertung der Kohärenz von Schallwellen, wobei in Fig. 1 der Schaltungsteil zur komplexen Signalanalyse und in Fig. 2 der Schaltungsteil zur Phasenkorrelation dargestellt ist,

Fig. 3 ein Blockschaltbild einer PRS-Anlage in Verbindung mit der Schaltungsanordnung in Fig. 1 und 2,

Fig. 4 ein Blockschaltbild einer erweiterten Schaltungsanordnung gemäß Fig. 1 und 2 zur Ortung von Schallquellen.

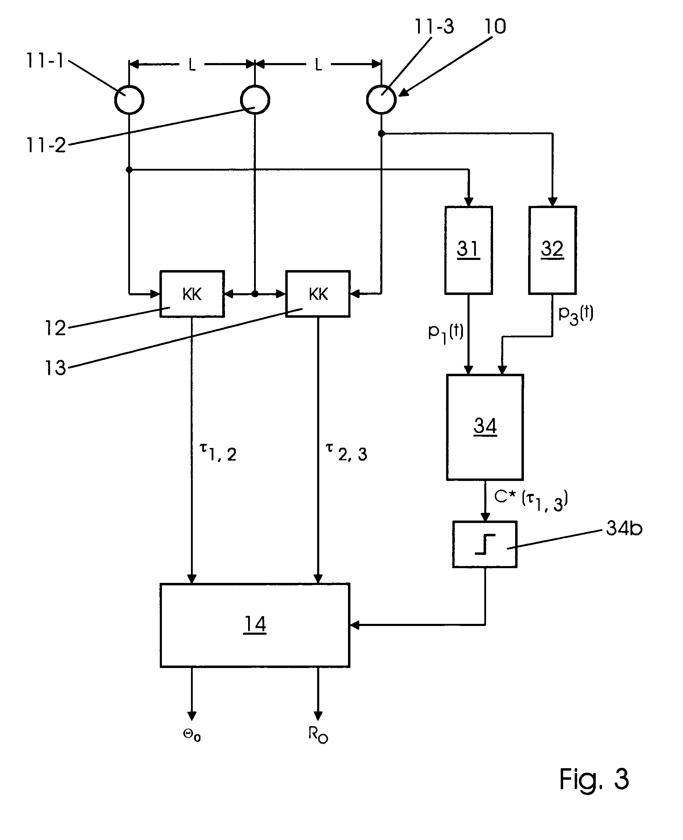

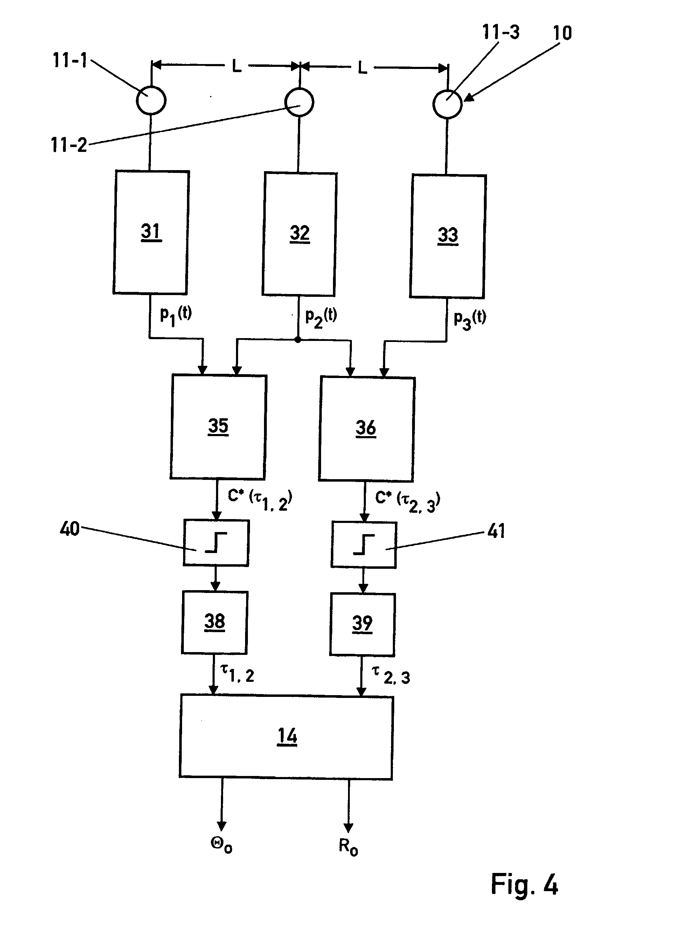

Zur Detektion, Ortung und Klassifikation von Schallquellen, die Schall ins Wasser abstrahlen, wird in der Sonartechnik eine weit von der Schallquelle entfernte, räumlich ausgedehnte Empfangsbasis mit mehreren voneinander beabstandeten, elektroakustischen Empfängern verwendet. In Fig. 3 und 4 ist ein Ausführungsbeispiel einer Sonaranlage zur Ortung von Schallquellen durch Bestimmen des Peilwinkels und der Entfernung im Blockschaltbild dargestellt. Diese Empfangsbasis 10 hat drei Empfänger, die jeweils von einem elektroakustischen Wandler 11 gebildet werden. Die drei Wandler 11 sind im Abstand L voneinander exakt auf einer Geraden angeordnet. Bei der Installation einer solchen Empfangsbasis an einem U-Boot ist der mittlere Wandler 11-2 mittschiffs in Turmnähe und die beiden äußeren Wandler 11-1 und 11-2 nahe des Hecks und des Bugs angeordnet. Für die Ortung einer Schallquelle werden die Phasen- oder Zeitverschiebungen zwischen den elektrischen Ausgangssignalen des mittleren Wandlers 11-2 und jedem der äußeren Wandler 11-1 und 11-3 bestimmt und daraus der Peilwinkel $\theta_0$ und die Entfernung $R_0$ gemäß den vorstehenden Gl. (1) und (2) berechnet. Hierzu werden die üblicherweise verstärkten und digitalisierten Ausgangssignale der Wandler 11-1 und 11-2 einerseits und 11-2 und 11-3 andererseits jeweils einem Kreuzkorrelator 12 bzw. 13 zugeführt, der die Zeitverschiebung $\tau_{1,2}$ bzw. $\tau_{2,3}$ zwischen den Ausgangssignalen bestimmt. Diese Werte werden einem Rechner 14 zugeführt, der aus diesen Werten, der bekannten Schallgeschwindigkeit im Wasser und dem Wandlerabstand L den Peilwinkel $\theta_0$, der gegen die auf dem mittleren Wandler 11-2 aufgestellte Normale gemessen ist, und die Entfernung $R_0$ der Schallquelle zum mittleren Wandler 11-2 gemäß den angegebenen Gl. (1) und (2) berechnet.

Um ein Konfidenzmaß für die so ermittelten Sonardaten, Peilwinkel und Entfernungen, zu erhalten und damit die Aussagequalität des Ortungsverfahrens zu steigern wird die Kohärenz der über die Empfangsbasis 10 sich ausbreitenden und von den Wandlern 11 empfangenen Schallwelle bewertet. Der dabei gewonnen Bewertungsfaktor ist ein Indiz dafür, mit welcher Wahrscheinlichkeit die Richtigkeit der Sonardaten unterstellt werden kann. Zur Gewinnung dieses Bewertungsfaktors wird in der Empfangsbasis 10 mit den drei Wandlern 11 mindestens ein Wandlerpaar ausgewählt und die Kohärenz der Phasen der elektrischen Ausgangssignale der beiden ausgewählten Wandler 11 bestimmt.

Im einzelnen wird hierzu aus jedem Ausgangssignals des Wandlerpaars, das ein reelles Signal $s_j(t)$ darstellt mittels einer Hilbert-Transformierten $H(s_j(t))$ ein komplexes Signal $c_j(t)$ erzeugt, das sich schreiben lässt zu

$$c_j(t) = s_j(t) + i \cdot H(s_j(t)) = A_j(t) \cdot \exp[i \cdot \Phi_j(t)] \qquad (3),$$

wobei $A_j(t) \cdot \exp[i \cdot \Phi_j(t)]$ eine analytische Beschreibung des Signals darstellt. $A_j(t)$ beschreibt die Einhüllende von $s_j(t)$ und $\Phi_j(t)$ die momentane Phase. j=1,2 steht für die beiden Ausgangssignale $s_1(t)$ des einen Wandlers 11 und $s_2(t)$ des anderen Wandlers 11. Um die Amplitudeninformation zu entfernen werden die beiden komplexen Signalen $c_j(t)$ mit j=1,2 normiert, indem diese komplexen Signale durch ihren Betrag dividiert werden gemäß

$$p_j(t) = \frac{c_j(t)}{|c_j(t)|} \qquad (4).$$

Damit enthält das normierte komplexe Signal $p_j(t)$ mit j=1,2 nur noch die Phaseninformationen der Signale.

Die beiden normierten komplexen Signale $p_j(t)$ mit j=1,2 werden in einem Zeitfenster $t=t_0$ bis $t=t_0 + N \cdot \Delta t$ in gleichen Zeitintervallen $\Delta t$ abgetastet und jeweils die den gleichen Zeitpunkten zugehörigen beiden Abtastwerte addiert. Von der Summe wird der Betrag gebildet. Die Beträge der Summen werden addiert, und von dem Additionsergebnis wird der Mittelwert gebildet, der als Bewertungsfaktor C ausgegeben wird. Diese Berechnung der Phasenkohärenz der beiden zu vergleichende Signale $s_j(t)$ mit j=1,2 lässt sich durch nachstehende Gleichung beschreiben, bei der $\tau$ die zwischen den beiden zu vergleichenden Signalen bestehende Zeitverschiebung ist:

$$C(\tau) \; = \; \frac{1}{2N} \sum_{t=t_0}^{t_0+N\cdot\Delta t} \left| p_1(\tau + t) + p_2(t) \right| \tag{5}.$$

Die Mittelung des Additionsergebnisses stellt sicher, dass die Phasenkohärenz und damit der Bewertungsfaktor $C(\tau)$ im Falle exakter Übereinstimmung beider Ausgangssignale +1 wird. Im Falle einer vollständigen Antikorrelation wird $C(\tau)=0$. Vollständige Antikorrelation bedeutet, dass die Signale kohärent sind, aber unterschiedliche Polarität besitzen, also zueinander um $\tau=180°$ oder T/2 verschoben sind, wenn T die Signalperiode ist. Die Abtastung der beiden Signale erfolgt in festen Zeitintervallen $\Delta t$, wobei n=1 der erste Abtastwert und n=N der letzte Abtastwert im Zeitfenster ist.

Will man im Falle der vollständigen Antikorrelation einen Bewertungsfaktor von -1 erreichen, so müssen zusätzlich jeweils die den gleichen Zeitpunkten zugehörigen beiden Abtastwerte voneinander subtrahiert und muss von der Differenz der Betrag gebildet werden. Die Beträge der Differenzen werden dann addiert, und von dem Additionsergebnis ein zweiter Mittelwert gebildet, der von dem gemäß Gl. (5) gebildeten ersten Mittelwert abgezogen wird. Als Ergebnis erhält man einen modifizierten Bewertungsfaktor $C^*(\tau)$, dessen Grenzen -1 und +1 betragen.

Zur Verringerung des Rechenaufwands werden vorteilhaft bereits nach Bildung des Betrags der Summe und des Betrags der Differenz von jeweils zwei einander zugehörigen Abtastwerten der Betrag der Differenz von dem Betrag der Summe subtrahiert und die Addition und die Mittelwertbildung auf die so gewonnenen Subtraktionsergebnisse angewandt, so dass man zur Berechnung der Phasenkohärenz $C^*(\tau)$ nachstehende Gleichung erhält, bei der $\tau$ die zwischen den beiden zu vergleichenden Signalen bestehende Zeitverschiebung ist:

$$C^*(\tau) \; = \; \frac{1}{2N} \sum_{t=t_0}^{t_0+N\cdot\Delta t} \left( \left| p_1(\tau + t) + p_2(t) \right| - \left| p_1(\tau + t) - p_2(t) \right| \right) \tag{6}.$$

Sind die beiden Signale perfekt korreliert, wird der zweite Term von Gl. (6) bei allen Abtastwerten 0 und der Bewertungsfaktor $C^*(\tau)$ nimmt den Wert +1 an. Für den Fall von antikorrelierten Signalen wird der erste Term 0, während der zweite Term den Wert +2 annimmt, so dass der Bewertungsfaktor $C^*(\tau)$ den Wert -1 erhält. Wenn keine Korrelation zwischen den Signalen besteht, dann werden beide Terme klein und ergeben einen betragsmäßig kleineren Wert.

Die Bildung der komplexen analytischen Signale $c_j(t)$ mittels der Hilbert-Transformierten $H(s_j(t))$ und die anschließende Normierung kann an einer beliebigen Stelle im direkten Verarbeitungsweg der (reellen) Ausgangssignale der beiden Empfänger eingefügt werden. Bei früher Digitalisierung der Ausgangssignale wird die Hilbert-Transformation auf die digitalen Samples der Abtastsignale angewendet, wobei als Abtastwerte des Zeitfensters die digitalen Samples verwendet werden.

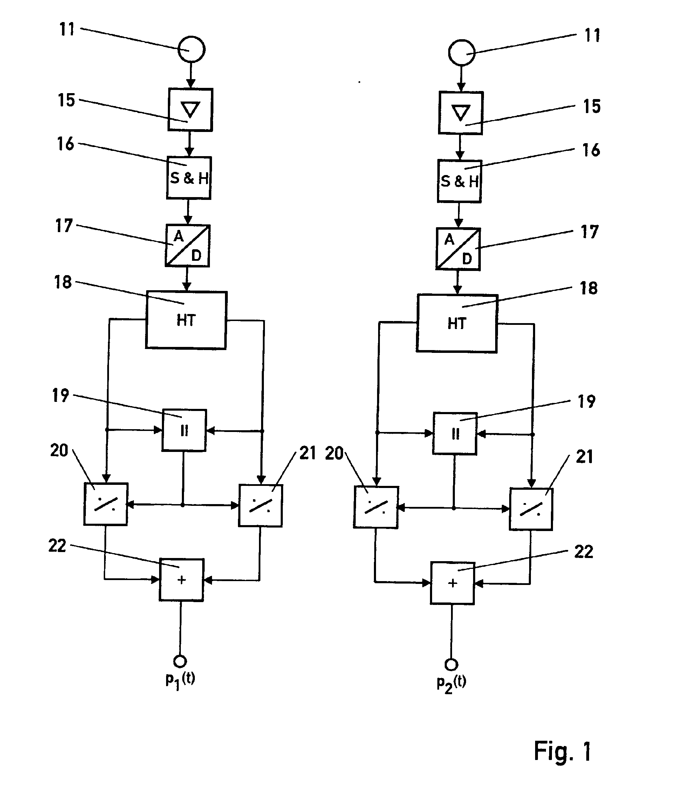

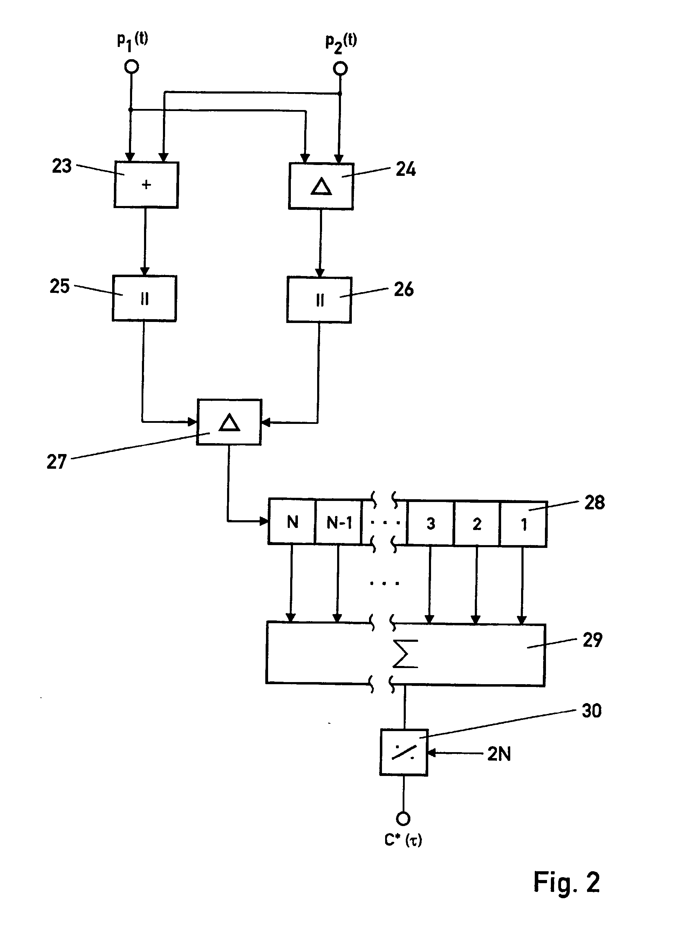

Eine Schaltungsanordnung zur Durchführung des beschriebenen Verfahrens zur Bewertung der Kohärenz einer im Raum abgetasteten Schallwelle und zur Ausgabe eines entsprechenden Bewertungsfaktors ist als Blockschaltbild in Fig. 1 und 2 angegeben, wobei Fig. 1 den Schaltungsteil für die komplexe Signalanalyse bis zur Bildung des normierten komplexen Signals $p_j(t)$ mit j=1,2 und der Schaltungsteil gemäß Fig. 2 den Phasenkorrelator zum Vergleich der beiden normierten, komplexen Signale $p_j(t)$ mit j=1,2 bis zur Ausgabe des Bewertungsfaktors $C^*(\tau)$ darstellt.

Wie aus dem Blockschaltbild der Fig. 1 hervorgeht, wird jedes elektrische Ausgangssignal des ausgewählten Paars von elektroakustischen Empfängern, die entsprechend dem Ausführungsbeispiel der Fig. 3 von zwei Wandlern 11 der Empfangsbasis 10 gebildet sind, verstärkt, abgetastet und digitalisiert. Hierzu ist jeweils ein Verstärker 15 und eine Abtasteinheit 16 (Sample and Hold) sowie ein Analog-Digitalwandler 17 vorgesehen. Bei einer analogen Signalverarbeitung wird auf den A/D-Wandler 17 verzichtet. Die Abtasteinheit 16 tastet das verstärkte Ausgangssignal in festen Zeitintervallen $\Delta t$ ab und die digitalisierten Datensätze der Abtastwerte oder Samples werden einem Hilbert-Transformator 18 zugeführt, an dessen Ausgängen sowohl der Real- als auch der Imaginärteil des komplexen analytischen Signals $c_j(t)$ abgenommen werden kann. Real- und Imaginärteil werden getrennt einerseits einem Betragsbildner 19 und andererseits einem Dividierer 20 bzw. 21 zugeführt, dessen anderer Eingang jeweils mit dem Ausgang des Betragsbildners 19 verbunden ist. Der normierte Realteil und der normierte Imaginärteil werden im Addierer 22 zum Sample des normierten, komplexen Signals $p_j(t)$ wieder zusammengesetzt. Für die in der beschriebenen Weise bearbeiteten elektrischen Ausgangssignale der beiden Wandler 11 des ausgewählten Wandlerpaars ergeben sich damit die beiden normierten komplexen Signale $p_1(t)$ und $p_2(t)$. Selbstverständlich ist es möglich, die Hilbert-Transformation und die Normierung unmittelbar hinter dem Verstärker 15 durchzuführen und das normierte komplexe Signal $p_j(t)$ mittels der Abtasteinheit 16 und des A/D-Wandlers 17 abzutasten und zu digitalisieren.

Wie Fig. 2 zeigt, werden die beiden normierten komplexen Signale $p_j(t)$ mit j=1,2, die nur noch die Phaseninformationen enthalten, miteinander korreliert, um das Maß ihrer Übereinstimmung festzustellen und den Bewertungs-

faktor $C^*(\tau)$ ihrer Kohärenz zu generieren. Mit den in Fig. 2 angegebenen Komponenten der Schaltungsanordnung wird die Berechnung der vorstehend angegebenen G1.(6) realisiert. Die Abtastwerte oder Samples der beiden normierten komplexen Signale $p_1(t)$ und $p_2(t)$ werden einerseits einem Addierer 23 und andererseits einem Subtrahierer 24 zugeführt. Von der am Ausgang des Addierers 23 ausgegebenen Summe zweier dem gleichen Abtastzeitpunkt zugehöriger Samples und der am Ausgang des Subtrahierers 24 ausgegebenen Differenz dieser Samples wird in den Betragsbildnern 25 und 26 jeweils der Betrag gebildet, und die beiden Beträge von Summe und Differenz werden einem Subtrahierer 27 zugeführt, der den Betrag der Differenz von dem Betrag der Summe subtrahiert. Die so entstehenden Subtraktionsergebnisse oder Differenzen der einzelnen Samples werden in einem Speicher, der hier beispielhaft als Schieberegister 28 ausgeführt ist, abgespeichert. Die Abspeicherung erfolgt für ein vorgegebenes Zeitfenster von $t=t_0$ bis $t=t_0 + N \cdot \Delta t$ für die Samples n=1 bis n=N, die nach jedem Zeitintervall $\Delta t$ angeliefert werden. Die Subtraktionsergebnisse der N Samples werden im Summierer 29 addiert, und im Dividierer 30 wird das Additionsergebnis durch die Anzahl 2N der insgesamt aus beiden Signalen $p_j(t)$ angelieferten Samples dividiert. Der am Ausgang des Dividierers 30 abnehmbare Bewertungsfaktor für die Phasenkohärenz der beiden Ausgangssignale nimmt den Wert +1 an, wenn beide Signale exakt korreliert sind, und den Wert -1 an, wenn beide Signale vollständig antikorreliert sind. Ein dazwischen liegender Wert gibt ein geringeres Maß der Übereinstimmung der beiden Signale an.

Der so ermittelte Bewertungsfaktor $C^*(\tau)$ für die Kohärenz einer empfangenen Schallwelle wird in der mit Fig. 3 beschriebenen Sonaranlage zur Ortung einer Schallquelle für die Bewertung der von der Sonaranlage ausgegebenen Messergebnisse für Peilwinkel und Entfernung der Schallquelle verwendet. Hierzu wird in der aus drei elektroakustischen Wandlern 11 bestehenden Empfangsbasis 10 der Sonaranlage ein Wandlerpaar ausgewählt, im Ausführungsbeispiel der Fig. 3 das Wandlerpaar aus den beiden äußeren Wandlern 11-1 und 11-3. Die elektrischen Ausgangssignale der beiden äußeren Wandler werden einer wie vorstehend beschriebenen Signalverarbeitung unterzogen, wobei die Blöcke 31 und 32 dem in Fig. 1 dargestellten Teil der Schaltungsanordnung und Block 34 dem in Fig. 2 dargestellten Teil der Schaltungsanordnung entspricht. Der am Ausgang vom Block 34 abnehmbare Bewertungsfaktor $C^*(\tau_{1,3})$, der eine Funktion der Zeitverschiebung $\tau_{1,3}$ zwischen den zu vergleichenden Signalen ist, wird im Ausführungsbeispiel der Fig. 3 dazu verwendet, die berechneten Sonardaten $\theta_0$, $R_0$ als Gut- oder Falschwerte zu erkennen und ggf. die Berechnung bzw. die Ausgabe der als Falschwerte erkannten Sonardaten zu unterdrücken. Als Falschwerte werden die Sonardaten dann ausgewiesen, wenn der Bewertungsfaktor $C^*(\tau_{1,3})$ unterhalb eines Vorgabewerts, z.B. 0,5 liegt. Hierzu wird der Bewertungsfaktor $C^*(\tau_{1,3})$ über eine entsprechende Schwelle 35 dem Rechner 14 zugeführt, so daß der Rechner 14 nur dann die Sonardaten $\theta_0$, $R_0$ berechnet, wenn $C^*(\tau_{1,3})$ die Schwelle 35 übersteigt. Alternativ kann der ausgegebene Bewertungsfaktor $C^*(\tau_{1,3})$ auch als Konfidenzmaß den berechneten Sonardaten $\theta_0$, $R_0$ zugeordnet werden, so daß der Nutzer anhand der zugeordneten Konfidenzmaße selbst eine Wertung der gemessenen Sonardaten vornehmen kann.

Selbstverständlich ist es auch möglich zur Gewinnung des Bewertungsfaktors andere Wandler 11 auszuwählen und deren Ausgangssignale in der aufgezeigten Weise zu verarbeiten. Möglich ist auch, die Ausgangssignale sämtlicher drei Wandler 11 miteinander paarweise in der beschriebenen Weise zu korrelieren, so daß insgesamt drei Bewertungsfaktoren, und zwar $C^*(\tau_{1,2})$, $C^*(\tau_{2,3})$ und $C^*(\tau_{1,3})$, zur Verfügung stehen.

Bei der in Fig. 4 dargestellten Schaltungsanordnung wird das vorstehend beschriebene Verfahren zur Ermittlung der Phasenkohärenz zwischen den Ausgangssignalen zweier elektroakustischer Empfänger einer Sonarbasis zusätzlich dazu verwendet, bei der eingangs beschriebenen Ortung einer Schallquelle mit Peilwinkel $\theta$ und Entfernung R die für die Berechnungen der Gl. (1) und (2) erforderlichen Zeitverschiebungen $\tau$ zwischen dem mittleren Wandler 11-2 und den außen liegenden Wandlern 11-1 und 11-3 zu ermitteln. Hierzu ist jedem Wandler 11 ein Block 31, 32, 33 zugeordnet, in dem eine Signalverarbeitung durchgeführt wird, wie sie zu Fig. 1 und 2 beschrieben worden ist. Im Block 31 wird das normierte komplexe Signal $p_1(t)$, im Block 32 das normierte komplexe Signal $p_2(t)$ und im Block 33 das normierte komplexe Signal $p_3(t)$ generiert. Das Signal $p_1(t)$ wird dem Block 35, das Signal $p_3(t)$ dem Block 36 und das Signal $p_2(t)$ sowohl dem Block 35 als auch dem Block 36 zugeführt. Jeder Block 35 bzw. 36 entspricht dem Phasenkorrelator, dessen Schaltung in Fig. 2 angegeben ist. Der Block 35 liefert den Bewertungsfaktor $C^*(\tau_{1,2})$, der abhängig ist von der Zeitverschiebung zwischen den Ausgangssignalen der Wandler 11-1 und 11-2, und der Block 36 liefert den Bewertungsfaktor $C^*(\tau_{2,3})$, der eine Funktion der Zeitverschiebung zwischen den Signalen der Wandler 11-2 und 11-3 ist. Jedem Block 35, 36 ist eine Kalibrierstufe 38 bzw. 39 nachgeordnet. In der Kalibrierstufe 38 ist der Bewertungsfaktor $C^*(\tau_{1,2})$ als Funktion der Zeitverschiebung $(\tau_{1,2})$ abgelegt. In der Kalibrierstufe 39 ist der Bewertungsfaktor $C^*(\tau_{2,3})$ als Funktion der Zeitverschiebung $(\tau_{2,3})$ abgelegt. Mit dem am Ausgang der Blöcke 35 und 36 anstehenden Bewertungsfaktoren $C^*(\tau_{1,2})$ und $C^*(\tau_{2,3})$ werden aus den Kalibrierstufen 38, 39 die Zeitverschiebungen $(\tau_{1,2})$ und $(\tau_{2,3})$ ausgelesen und dem Rechner 14 zugeführt. Der Rechner 14 berechnet nach den G1. (1) und (2) die Sonardaten, Peilwinkel $\theta_0$ und Entfernung $R_0$. Um ausschließlich vertrauenswürdige Sonardaten zu erhalten, werden nur solche Bewertungsfaktoren in die Kalibrierstufen 38 und 39 eingegeben, die oberhalb eines vorgegebenen Schwellwerts, der beispielsweise bei $C^*=0,5$ festgesetzt ist, liegen. Hierzu ist jeweils zwischen dem Block 35 und der Kalibrierstufe 38 bzw. dem Block 36 und der Kalibrierstufe 39 eine Schwelle 40 bzw. 41 eingefügt.

Die Empfänger der Empfangsbasis 10 können, wie beschrieben, von einzelnen Wandlern 11, die eine Dipol- oder Rundumcharakteristik aufweisen, gebildet werden. Als elektroakustische Empfänger der Empfangsbasis 10 können aber auch Gruppen von elektroakustischen Wandlern 11 verwendet werden, die in Horizontalrichtung oder in Vertikalrichtung voneinander beabstandet linear angeordnet sind. Im Falle der vertikalen Anordnung spricht man von sog. Staves. In solchen Fälle wird als das wie beschrieben zu verarbeitende Ausgangssignal des Empfängers ein aus den Ausgangssignalen der Wandlergruppen abgeleitetes Gruppensignal verwendet.

Die Erfindung kann auch dazu benutzt werden, die lineare Ausrichtung der in einer sog. Schleppantenne angeordneten elektroakustischen Wandler zu bewerten. Der Bewertungsfaktor lässt dabei Rückschlüsse auf den Versatz eines Wandlers bezüglich der linearen Ausrichtung zu.

## Patentansprüche

1. Verfahren zur Bewertung der Kohärenz von Schallwellen, die sich über eine räumlich ausgedehnte, mehrere voneinander beabstandete, elektroakustische Empfänger (11) aufweisende Empfangsbasis (10) einer Sonaranlage ausbreiten, wobei

   a) in der Empfangsbasis (10) ein Paar elektroakustische Empfänger (11) von elektroakustischen Empfängern (11) der Empfangsbasis (10) der Sonaranlage ausgewählt und
   b) die Kohärenz der Phasen der elektrischen Ausgangssignale der beiden Empfänger (11) bestimmt wird, **dadurch gekennzeichnet, dass** zur Bestimmung der Phasenkohärenz

   b'1) aus jedem Ausgangssignal der beiden Empfänger (11) jeweils ein normiertes komplexes Signal ($p_j(t)$) gebildet wird,
   b'2) dass die beiden normierten komplexen Signale in einem Zeitfenster ($t=t_0$ bis $t=t_0+N\cdot\Delta t$) zu gleichen Zeitpunkten abgetastet und
   b'3) jeweils die den gleichen Zeitpunkten zugehörigen beiden Abtastwerte addiert werden und
   b'4) von der Summe der Betrag gebildet wird und
   b'5) dass die Beträge der Summen addiert werden und
   b'6) aus dem Additionsergebnis ein erster Mittelwert gebildet wird und

   c) aus dieser Kohärenz der Phasen ein Bewertungsfaktor zur Bewertung der Kohärenz der sich über die Empfangsbasis ausbreitenden Schallwellen abgeleitet wird, indem

   c') der Mittelwert als Bewertungsfaktor (C) ausgegeben wird.

2. Verfahren nach Anspruch 1, **dadurch gekennzeichnet, dass** zusätzlich jeweils die den gleichen Zeitpunkten zugehörigen Abtastwerte voneinander subtrahiert werden und von der Differenz der Betrag gebildet wird, dass die Beträge der Differenzen addiert werden und aus dem Additionsergebnis ein zweiter Mittelwert gebildet wird, dass die beiden Mittelwerte voneinander subtrahiert werden und dass die Differenz der beiden Mittelwerte als modifizierter Bewertungsfaktor (C*) ausgegeben wird.

3. Verfahren nach Anspruch 1 und 2, **dadurch gekennzeichnet, dass** nach Bildung des Betrags der Summe und des Betrags der Differenz von jeweils zwei einander zugehörigen Abtastwerten bereits der Betrag der Differenz von dem Betrag der Summe subtrahiert wird und die Addition und Mittelwertbildung auf die so gewonnenen Subtraktionsergebnisse von allen Abtastwerten angewandt werden.

4. Verfahren nach einem der Ansprüche 1 - 3, **dadurch gekennzeichnet, dass** das komplexe Signal mittels einer Hilbert-Transformierten erzeugt und dessen Normierung durch Division des komplexen Signals durch seinen Betrag vorgenommen wird.

5. Verfahren nach Anspruch 4, **dadurch gekennzeichnet, dass** die Bildung des normierten komplexen Signals und dessen Abtastung im Zeitfenster so durchgeführt wird, dass die vorzugsweise verstärkten Ausgangssignale in vorzugsweise festen Zeitintervallen abgetastet und die Abtastwerte digitalisiert und die Hilbert-Transformierte und die Normierung auf die digitalen Abtastwerte angewendet werden.

6. Verfahren nach einem der Ansprüche 1 - 5, **dadurch gekennzeichnet, dass** aus dem Bewertungsfaktor (C*) die Phasen- oder Zeitverschiebung ($\tau$) zwischen den Ausgangssignalen des ausgewählten Empfängerpaars bestimmt wird.

7. Verfahren nach Anspruch 6, **dadurch gekennzeichnet, dass** die Bestimmung der Phasen- oder Zeitverschiebung ($\tau$) nur dann vorgenommen wird, wenn der Bewertungsfaktor (C*) einen Vorgabewert überschreitet.

8. Verfahren nach einem der Ansprüche 1 - 7, **dadurch gekennzeichnet, dass** als elektroakustischer Empfänger ein einzelner elektroakustischer Wandler (11) verwendet wird.

9. Verfahren nach einem der Ansprüche 1 - 7, **dadurch gekennzeichnet, dass** als elektroakustischer Empfänger eine Gruppe von voneinander vorzugsweise äquidistant beabstandeten elektroakustischen Wandlern verwendet wird, die in Horizontalrichtung oder Vertikalrichtung linear angeordnet sind und dass als Ausgangssignal des Empfängers ein aus den Ausgangssignalen der Wandlergruppe abgeleitetes Gruppensignal verwendet wird.

10. Verfahren nach einem der Ansprüche 1- 5 und Anspruch 8, **gekennzeichnet durch** seine Anwendung auf ein Verfahren zum passiven Orten einer im Wasser befindlichen Schallquelle, bei dem mittels drei im Abstand voneinander linear angeordneten elektroakustischen Wandlern (11) der von der Schallquelle abgestrahlte Schall empfangen, die Phasen- oder Zeitverschiebung ($\tau_{1,2}$, $\tau_{2,3}$) zwischen den elektrischen Ausgangssignalen des mittleren Wandlers (11-2) und jedem äußeren Wandler (11-1,11-3) bestimmt und aus den beiden Phasen- oder Zeitverschiebung ($\tau_{1,2}$, $\tau_{2,3}$) der Peilwinkel ($\theta_0$) zur Schallquelle und deren Entfernung ($R_0$) zum mittleren Wandler (2) berechnet wird, indem mit zwei der Wandler, vorzugsweise mit den beiden äußeren Wandlern (11-1,11-3) ein Paar von elektroakustischen Empfängern gebildet wird und der ausgegebene Bewertungsfaktor (C*($\tau_{1,3}$)) den berechneten Werten für Peilwinkel ($\theta_0$) und Entfernung ($R_0$) als Konfidenzmaß zugeordnet wird.

11. Verfahren nach Anspruch 10, **dadurch gekennzeichnet, dass** die berechneten Werte für Peilwinkel ($\theta_0$) und Entfernung ($R_0$) als Falschwerte ausgewiesen werden, wenn der Bewertungsfaktor (C*($\tau_{1,3}$)) einen Vorgabewert unterschreitet.

12. Verfahren nach Anspruch 7 und 8, **gekennzeichnet durch** seine Anwendung auf ein Verfahren zum passiven Orten einer im Wasser befindlichen Schallquelle, bei dem mittels drei im Abstand voneinander linear angeordneten elektroakustischen Wandlern (11) der von der Schallquelle abgestrahlte Schall empfangen, die Phasen oder Zeitverschiebungen ($\tau_{1,2}$, $\tau_{2,3}$) zwischen den elektrischen Ausgangssignalen des mittleren Wandlers (11-2) und jedem äußeren Wandler (11-1,11-3) bestimmt und aus den beiden Phasen- oder Zeitverschiebungen ($\tau_{1,2}$, $\tau_{2,3}$) der Peilwinkel ($\theta_0$) zur Schallquelle und deren Entfernung ($R_0$) zum mittleren Wandler (11-2) berechnet wird, indem mit dem mittleren Wandler (11-2) und jedem der äußeren Wandler (11-1,11-3) jeweils ein ausgewähltes Paar von elektroakustischen Empfängern gebildet wird und die aus den Bewertungsfaktoren (C*($\tau_{1,2}$)), (C*($\tau_{2,3}$)) bestimmte Phasen oder Zeitverschiebungen ($\tau_{1,2}$, $\tau_{2,3}$) zur Berechnung von Peilwinkel ($\theta_0$) und Entfernung ($R_0$) verwendet werden.

13. Schaltungsanordnung zur Bewertung der Kohärenz von sich über eine räumlich ausgedehnte, mehrere voneinander beabstandete, elektroakustische Empfänger (11) aufweisende Empfangsbasis (10) einer Sonaranlage ausbreitenden Schallwellen, wobei

    a) ein Paar elektroakustische Empfänger (11) von den elektroakustischen Empfängern (11) der Empfangsbasis (10) der Sonaranlage auswählbar ist und
    b) dass die Schaltungsanordnung einen Phasenkorrelator (34) aufweist, der derart ausgebildet ist, um

        b') die Kohärenz der Phasen der elektrischen Ausgangssignale der beiden Empfänger (11) durch Phasenkorrelation zu bestimmen, **dadurch gekennzeichnet, dass** zur Bestimmung der Phasenkohärenz

            b"1) aus jedem Ausgangssignal der beiden Empfänger (11) jeweils ein normiertes komplexes Signal ($p_j(t)$) gebildet wird,
            b"2) dass die beiden normierten komplexen Signale in einem Zeitfenster ($t=t_0$ bis $t=t_0+N\cdot\Delta t$) zu gleichen Zeitpunkten abgetastet und
            b''3) jeweils die den gleichen Zeitpunkten zugehörigen beiden Abtastwerte addiert werden und
            b''4) von der Summe der Betrag gebildet wird und
            b''5) dass die Beträge der Summen addiert werden und
            b''6) aus dem Additionsergebnis ein erster Mittelwert gebildet wird, und

    c) aus dieser Kohärenz der Phasen ein Bewertungsfaktor zur Bewertung der Kohärenz der sich über die Empfangsbasis ausbreitenden Schallwellen ableitbar ist, indem

c') der Mittelwert als Bewertungsfaktor (c) ausgegeben wird.

**Claims**

1. Method for assessing the coherence of sound waves, which propagate over a spatially expanded receiving basis (10) of a sonar installation having several electroacoustic receivers (11) spaced at a distance from one another, wherein

   a) in the receiving basis (10) a pair of electroacoustic receivers (11) is selected from electroacoustic receivers (11) of the receiving basis (10) of the sonar installation and
   b) the coherence of the phases of the electrical output signals of the two receivers (11) is determined, **characterised by** that to determine the phase coherence

   b'1) from each output signal of the two receivers (11) a standardised complex signal ($p_j(t)$) is formed respectively,
   b'2) that the two standardised complex signals are sampled in a time window ($t=t_0$ to $t=t_0+N\cdot\Delta t$) at identical times and
   b'3) the two sampling values belonging to the same times respectively are added and
   b'4) from the sum the absolute value is formed and
   b'5) that the absolute values of the sums are added and
   b'6) from the addition result a first mean value is formed and

   c) from this coherence of the phases an assessment factor is derived for assessing the coherence of the sound waves propagating over the receiving basis, in that

   c') the mean value is output as assessment factor (C).

2. Method according to claim 1, **characterised by** that in addition, the sampling values belonging to the same times respectively are subtracted from one another and from the difference the absolute value is formed, that the absolute values of the differences are added and from the addition result a second mean value is formed, that the two mean values are subtracted from one another and that the difference of the two mean values is output as modified assessment factor (C*).

3. Method according to claim 1 and 2, **characterised by** that following formation of the absolute value of the sum and the absolute value of the difference of two sampling values respectively belonging to one another, the absolute value of the difference is subtracted from the absolute value of the sum and the addition and mean value formation are applied to the subtraction results thus obtained of all sampling values.

4. Method according to one of claims 1 - 3, **characterised by** that the complex signal is generated by means of a Hilbert transform and its standardisation is carried out by division of the complex signal by its absolute value.

5. Method according to claim 4, **characterised by** that the formation of the standardised complex signal and its sampling in the time window are carried out such that the preferably amplified output signals are sampled in preferably fixed time intervals and the sampling values digitalised and the Hilbert transforms and the standardisation are applied to the digital sampling values.

6. Method according to one of claims 1 - 5, **characterised by** that the phase or time shift ($\tau$) between the output signals of the selected receiver pair is determined from the assessment factor (C*).

7. Method according to claim 6, **characterised by** that the determination of the phase or time shift ($\tau$) is only carried out if the assessment factor (C*) exceeds a default value.

8. Method according to one of claims 1 - 7, **characterised by** that a single electroacoustic transducer (11) is used as electroacoustic receiver.

9. Method according to one of claims 1 - 7, **characterised by** that a group of electroacoustic transducers preferably spaced equidistantly from one another is used as electroacoustic receiver, which transducers are arranged linearly in a horizontal direction or vertical direction and that a group signal derived from the output signals of the transducer group is used as output signal of the receiver.

10. Method according to one of claims 1 - 5 and claim 8, **characterised by** its application to a method for the passive location of a sound source located in the water, in which the sound radiated by the sound source is received by means of three electroacoustic transducers (11) arranged linearly at a distance from one another, the phase or time shift ($\tau_{1,2}$, $\tau_{2,3}$) between the electrical output signals of the middle transducer (11-2) and each outer transducer (11-1, 11-3) is determined and from the two phase- or time shifts ($\tau_{1,2}$, $\tau_{2,3}$) the bearing angle ($\theta_0$) to the sound source and its distance ($R_0$) from the middle transducer (2) are calculated, in that a pair of electroacoustic receivers is formed with two of the transducers, preferably with the two outer transducers (11-1, 11-3) and the output assessment factor ($C^*(\tau_{1,3},)$) is assigned to the calculated values for bearing angle ($\theta_0$) and distance ($R_0$) as a confidence measurement.

11. Method according to claim 10, **characterised by** that the calculated values for bearing angle ($\theta_0$) and distance ($R_0$) are identified as incorrect values if the assessment factor ($C^*(\tau_{1,3},)$) falls below a default value.

12. Method according to claim 7 and 8, **characterised by** its application to a method for the passive location of a sound source located in the water, in which the sound radiated by the sound source is received by means of three electroacoustic transducers (11) arranged linearly at a distance from one another, the phase or time shifts ($\tau_{1,2}$, $\tau_{2,3}$) between the electrical output signals of the middle transducer (11-2) and each outer transducer (11-1, 11-3) is determined and from the two phase or time shifts ($\tau_{1,2}$, $\tau_{2,3}$) the bearing angle ($\theta_0$) to the sound source and its distance ($R_0$) from the middle transducer (2) are calculated, in that a selected pair of electroacoustic receivers is formed respectively with the middle transducer (11-2) and each of the outer transducers (11-1, 11-3) and the phases or time shifts ($\tau_{1,2}$, $\tau_{2,3}$) determined from the assessment factors ($C^*(\tau_{1,2},)$), ($C^*(\tau_{2,3},)$) are used to calculate bearing angle ($\theta_0$) and distance ($R_0$).

13. Circuit arrangement for assessing the coherence of sound waves, which propagate over a spatially expanded receiving basis (10) of a sonar installation having several electroacoustic receivers (11) spaced at a distance from one another, wherein

   a) a pair of electroacoustic receivers (11) is selectable from the electroacoustic receivers (11) of the receiving basis (10) of the sonar installation and
   b) that the circuit arrangement has a phase correlator (34), which is formed so as to

   b') determine the coherence of the phases of the electrical output signals of the two receivers (11) by phase correlation, **characterised by** that to determine the phase coherence,

   b'1) from each output signal of the two receivers (11) a standardised complex signal ($p_j(t)$) is formed respectively,
   b'2) the two standardised complex signals are sampled in a time window ($t=t_0$ to $t=t_0+N\cdot\Delta t$) at identical times and
   b'3) the two sampling values belonging to the same times respectively are added and
   b'4) from the sum the absolute value is formed and
   b'5) that the absolute values of the sums are added and
   b'6) from the addition result a first mean value is formed and

   c) from this coherence of the phases an assessment factor is derivable for assessing the coherence of the sound waves propagating over the receiving basis, in that

   c') the mean value is output as assessment factor (c).

**Revendications**

1. Procédé d'évaluation de la cohérence d'ondes acoustiques, qui se propagent sur une base de réception (10) étendue dans l'espace, présentant plusieurs récepteurs électroacoustiques (11) espacés les uns des autres, d'une installation sonar, dans lequel

   a) dans la base de réception (10) une paire de récepteurs électroacoustiques (11) est sélectionnée parmi les récepteurs électroacoustiques (11) de la base de réception (10) de l'installation sonar et

b) la cohérence des phases des signaux de sortie électriques des deux récepteurs (11) est déterminée, **caractérisé en ce que** pour la détermination de la cohérence de phase

b'1) un signal complexe normalisé ($p_j(t)$) est formé respectivement à partir de chaque signal de sortie des deux récepteurs (11),

b'2) les deux signaux complexes normalisés sont balayés dans une fenêtre de temps ($t = t_0$ à $t = t_0 + N \cdot \Delta t$) à des instants identiques et

b'3) respectivement les deux échantillons associés aux mêmes instants sont additionnés et

b'4) le montant de la somme est formé et

b'5) les montants des sommes sont additionnés et

b'6) une première valeur moyenne est formée à partir du résultat de l'addition et

c) un facteur d'évaluation pour l'évaluation de la cohérence des ondes acoustiques se propageant sur la base de réception est dérivé à partir de cette cohérence des phases, **en ce que**

c') la valeur moyenne est sortie en tant que facteur d'évaluation (C).

2. Procédé selon la revendication 1, **caractérisé en ce qu'**en outre, les échantillons associés aux mêmes instants sont soustraits respectivement les uns des autres et le montant de la différence est formé, **en ce que** les montants des différences sont additionnés et une seconde valeur moyenne est formée à partir du résultat de l'addition, **en ce que** les deux valeurs moyennes sont soustraites l'une de l'autre et **en ce que** la différence des deux valeurs moyennes est sortie en tant que facteur d'évaluation modifié (C*).

3. Procédé selon les revendications 1 et 2, **caractérisé en ce qu'**après la formation du montant de la somme et du montant de la différence de respectivement deux échantillons associés l'un à l'autre, le montant de la différence est déjà soustrait du montant de la somme et l'addition et la formation de la valeur moyenne sont appliquées aux résultats de soustraction ainsi obtenus de tous les échantillons.

4. Procédé selon l'une des revendications 1 à 3, **caractérisé en ce que** le signal complexe est généré au moyen d'une transformée de Hilbert et sa normalisation est effectuée par la division du signal complexe par sa grandeur.

5. Procédé selon la revendication 4, **caractérisé en ce que** la formation du signal complexe normalisé et son balayage dans la fenêtre de temps sont exécutés de sorte que les signaux de sortie de préférence amplifiés sont balayés dans des intervalles de temps de préférence fixes et les échantillons sont numérisés et la transformée de Hilbert et la normalisation sont appliquées aux échantillons numérisés.

6. Procédé selon l'une des revendications 1 à 5, **caractérisé en ce qu'**à partir du facteur d'évaluation (C*), le décalage de phase ou le décalage temporel (T) entre les signaux de sortie de la paire de récepteurs sélectionnée est déterminé.

7. Procédé selon la revendication 6, **caractérisé en ce que** la détermination du décalage de phase ou du décalage temporel (T) est effectuée uniquement quand le facteur d'évaluation (C*) dépasse une valeur spécifiée.

8. Procédé selon l'une des revendications 1 à 7, **caractérisé en ce qu'**un transducteur électroacoustique (11) unique est utilisé en tant que récepteur électroacoustique.

9. Procédé selon l'une des revendications 1 à 7, **caractérisé en ce qu'** en tant que récepteur électroacoustique un groupe de transducteurs électroacoustiques espacés de préférence à équidistance les uns des autres est utilisé, qui sont disposés de manière linéaire dans le sens horizontal ou dans le sens vertical et **en ce qu'**un signal de groupe dérivé des signaux de sortie du groupe de transducteurs est utilisé en tant que signal de sortie du récepteur.

10. Procédé selon l'une des revendications 1 à 5 et la revendication 8, **caractérisé par** son application à un procédé pour la localisation passive d'une source acoustique se trouvant dans l'eau, dans lequel au moyen de trois transducteurs électroacoustiques (11) disposés de manière linéaire espacés les uns des autres le son émis par la source acoustique est reçu, le décalage de phase ou le décalage temporel ($T_{1,2}$, $T_{2,3}$) entre les signaux de sortie électriques du transducteur (11-2) central et chaque transducteur extérieur (11-1, 11-3) est déterminé et à partir des deux décalages de phase ou décalages temporels ($T_{1,2}$, $T_{2,3}$) l'angle de relèvement ($\theta_0$) par rapport à la source acoustique et la distance ($R_0$) entre celle-ci et le transducteur central (2) sont calculés, en ce qu'avec deux des transducteurs, de préférence avec les deux transducteurs extérieurs (11-1, 11-3) une paire de récepteurs électroacoustiques est formée et le facteur d'évaluation (C*($T_{1,3}$)) sorti est assigné aux valeurs calculées pour l'angle de relèvement ($\theta_0$) et la distance ($R_0$) en tant que mesure de confiance.

11. Procédé selon la revendication 10, **caractérisé en ce que** les valeurs calculées pour l'angle de relèvement ($\theta_0$) et la distance ($R_0$) sont présentées comme des valeurs erronées quand le facteur d'évaluation (C*($T_{1,3}$)) n'atteint pas une valeur spécifiée.

12. Procédé selon les revendications 7 et 8, **caractérisé par** son application sur un procédé pour la localisation passive d'une source acoustique se trouvant dans l'eau, dans lequel au moyen de trois transducteurs électroacoustiques (11) disposés de manière linéaire espacés les uns des autres le son émis par la source acoustique est reçu, les décalages de phase ou décalages temporels ($T_{1,2}$, $T_{2,3}$) entre les signaux de sortie électriques du transducteur (11-2) central et chaque transducteur extérieur (11-1, 11-3) sont déterminés et à partir des deux décalages de phase ou décalages temporels ($T_{1,2}$, $T_{2,3}$) l'angle de relèvement ($\theta_0$) par rapport à la source acoustique et la distance ($R_0$) entre celle-ci et le transducteur central (11-2) sont calculés, en ce qu'avec le transducteur central (11-2) et chacun des transducteurs extérieurs (11-1, 11-3) respectivement une paire sélectionnée de récepteurs électroacoustiques est formée et les décalages de phase ou décalages temporels ($T_{1,2}$, $T_{2,3}$) déterminés à partir des facteurs d'évaluation (C*($T_{1,2}$)), (C*($T_{2,3}$)) sont utilisés pour le calcul de l'angle de relèvement ($0_0$) et de la distance ($R_0$).

13. Circuit d'évaluation de la cohérence d'ondes acoustiques se propageant sur une base de réception (10) étendue dans l'espace, présentant plusieurs récepteurs électroacoustiques (11) espacés les uns des autres, d'une installation sonar, dans lequel

    a) une paire de récepteurs électroacoustiques (11) des récepteurs électroacoustiques (11) de la base de réception (10) de l'installation sonar peut être sélectionnée et
    b) le circuit présente un corrélateur de phase (34) qui est conçu de façon à ce que

        b') la cohérence des phases des signaux de sortie électriques des deux récepteurs (11) est déterminée par corrélation de phase, **caractérisé en ce que** pour la détermination de la cohérence de phase

            b"1) un signal complexe normalisé ($p_j(t)$) est formé respectivement à partir de chaque signal de sortie des deux récepteurs (11),
            b"2) les deux signaux complexes normalisés sont balayés dans une fenêtre de temps ($t = t_0$ à $t = t_0 + N \cdot \Delta t$) à des instants identiques et
            b"3) respectivement les deux échantillons associés aux mêmes instants sont additionnés et
            b"4) le montant de la somme est formé et
            b"5) les montants des sommes sont additionnés et
            b"6) une première valeur moyenne est formée à partir du résultat de l'addition, et

    c) un facteur d'évaluation pour l'évaluation de la cohérence des ondes acoustiques se propageant sur la base de réception peut être dérivé à partir de cette cohérence des phases, **en ce que**

        c') la valeur moyenne est sortie en tant que facteur d'évaluation (C).

Fig. 1

Fig. 2

EP 1 281 982 B1

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1099958 A
- EP 0702245 A
- DE 10036291 A
- EP 1176428 A
- US 4910719 A

**In der Beschreibung aufgeführte Nicht-Patentliteratur**

- *Naval Forces No. VI/1987,* 27-30